# EUROPEAN PATENT APPLICATION

(11) **EP 4 711 680 A1**
(43) Date of publication of application: **18.03.2026**
(21) Application number: 25812888.3
(22) Date of filing: 13.06.2025
(51) Int. Cl.: F24C 15/20, B01D 46/00, B66D 1/12, B66D 1/30, F24F 7/06, F24F 13/14

(54) **ARTIFICIAL INTELLIGENCE RANGE HOOD**

(30) Priority: 22.07.2024 KR 20240096508
(71) Applicant: Dabin Watec Co., Ltd, Namyangju-si, Gyeonggi-do 12129 (KR)
(72) Inventor: PARK, Min Jae, Namyangju-si, Gyeonggi-do 12129 (KR)
(74) Representative: Nordic Patent Service A/S
(86) International application number: PCT/KR2025/008151
(87) International publication number: WO 2026/023860

(57) **Abstract**

The present invention relates to an artificial intelligence range hood which may rapidly and easily discharge cooking oil fumes and indoor polluted air by selectively opening or closing a movable intake and exhaust duct or an indoor polluted air intake and exhaust duct, may prevent industrial accidents in advance, such as lung cancer that may be caused by continuously sucking cooking oil fumes including various harmful substances by a reference amount or more, may automatically create a pleasant indoor air quality environment by significantly improving indoor air quality, may rapidly suck and discharge the cooking oil fumes by lowering the movable intake and exhaust duct to a portion where the cooking oil fumes are generated, and may rapidly discharge the cooking oil fumes by allowing the cooking oil fumes to sequentially pass through the movable intake and exhaust duct and a fixed intake and exhaust duct after the cooking oil fumes are collected into a cooking oil fume suction hole in a 360° lateral direction of an oil drip tray, thereby protecting the health of a cook.

## Description

### [Technical Field]

The present invention relates to an artificial intelligence range hood, and more specifically, to an artificial intelligence range hood which may rapidly and easily discharge cooking oil fumes and indoor polluted air by selectively opening or closing a movable intake and exhaust duct or an indoor polluted air intake and exhaust duct, and may enhance suction and discharge efficiency in a narrow place as well as a wide place and efficiently prevent lung cancer caused due to breathing in the cooking oil fumes because the cooking oil fumes are rapidly sucked in a 360° direction through a cooking oil fume suction hole of an oil drip tray.

### [Background Art]

In general, a hood system is a device installed to prevent indoor air pollution in advance by timely discharging air pollutants caused by heat, cooking odor, smoke, exhaust gas, waste gas, steam, and the like generated during cooking various foods, and a penetration rate thereof is increasing day by day according to the perception of consumers who consider health as a major factor.

A conventional hood system is installed at a distance above a range, which is a heating device, so as to suck cooking gas generated during food cooking.

The range is a device for cooking food using gas or electricity, and a gas range or a microwave oven is a device for cooking food using gas or electricity.

An induction-type range applies an indirect method of inducing heat to an object to be heated (pot) itself by using a magnetic field, and such an induction-type range may reduce indoor air pollution compared to the gas range, prevent an increase in indoor temperature in hot summer because a lot of heat is not generated in the device itself, prevent damage such as burns due to heat because an upper plate thereof is not heated, and rapid cooking has been widely used recently as the maximum advantage.

In general, in a cooking space including various restaurants for cooking meat, grilled fish, Chinese cuisine, fried dishes, and the like, and large kitchens of schools, companies, and the like, a large amount of steam and cooking oil fumes (various harmful substances including harmful gases, fine substances, and the like generated when frying or baking food while cooking) are generated during a cooking process, resulting in a problem of indoor air pollution. Such steam and cooking oil fumes include carcinogens such as fat and fatty acids generated when grilling or frying meat or fish, amine group-containing odor substances that are main components of a fishy smell, ethyl alcohol used as a meat tenderizer, aromatic hydrocarbons containing volatile substances that are main components of the fragrance of various spices and cooking ingredients and odors, and benzopyrene and formaldehyde that are generated when heated and carbonized, nitrogen oxides (NOx), carbon dioxide (CO₂) generated by the combustion of carbon monoxide (CO), mixed gases in which fly ash and ultrafine dust are mixed with air and water vapor, and the like.

As described above, the indoor air pollution caused by cooking oil fumes generated in the cooking place needs to be eliminated because the indoor air pollution causes odors and adversely affects the human body. Accordingly, even the International Agency for Research on Cancer classifies cooking oil fumes as carcinogenic substances, and accordingly, even the government recognizes lung cancer as an industrial accident when cooks who work at a cooking place in an environment exposed to cooking oil fumes have lung cancer.

The conventional hood system includes a suction part capable of sucking cooking gas, and a hood body coupled to an upper end of the suction part to allow the cooking gas sucked through the suction part to pass through an upper portion thereof.

The suction part is provided with a filter or a light, and the suction part or one side of the hood body is provided with a blower so that suction and discharge of cooking oil fumes are smoothly performed.

However, since the conventional hood system has a structure in which cooking oil fumes are sucked and discharged only in an upper portion of the hood range, a distance between a point where the cooking oil fumes are generated and a point where the cooking oil fumes are sucked and discharged is wide, resulting in a problem that users may harm their health due to breathing in the cooking oil fumes.

In addition, in the conventional hood system, since most of the suction ducts are formed in a circular hole structure, a lower portion thereof is formed in an open structure, and the cooking oil fumes are sucked and discharged through the open portion, there is a problem in that the suction and discharge efficiency in a narrow place is present, but the suction and discharge efficiency in a wide place is significantly reduced, thereby causing lung cancer due to the breathing in the cooking oil fumes.

### [Disclosure]

### [Technical Problem]

The present invention has been invented in order to improve the above-described problems, and a first object to be solved by the present invention is to provide an artificial intelligence range hood which may rapidly and easily discharge cooking oil fumes and indoor polluted air by selectively opening or closing a movable intake and exhaust duct or an indoor polluted air intake and exhaust duct, may prevent industrial accidents in advance, such as lung cancer that may be caused by continuously sucking cooking oil fumes including various harmful substances by a reference amount or more, and may automatically create a pleasant indoor air quality environment by significantly improving indoor air quality.

A second object to be solved by the present invention is to provide an artificial intelligence range hood which may be configured to rapidly suck and discharge the cooking oil fumes by lowering the movable intake and exhaust duct to a portion where the cooking oil fumes are generated, and rapidly discharge the cooking oil fumes by allowing the cooking oil fumes to sequentially pass through the movable intake and exhaust duct and a fixed intake and exhaust duct after the cooking oil fumes are collected into a cooking oil fume suction hole in a 360° lateral direction of an oil drip tray, thereby protecting the health of a cook.

A third problem to be solved by the present invention is to provide an artificial intelligence range hood in which a control unit may control an operation of a discharge mode conversion unit based on artificial intelligence to allow the cooking oil fumes or the indoor polluted air to be automatically discharged, may drive a hood fan motor to allow the cooking oil fumes to be automatically and rapidly discharged, after a position of a duct housing of the movable intake and exhaust duct is adjusted while automatically moving the same up and down, may compare concentrations of various harmful substances detected by a harmful substance detection sensor unit with reference values for various harmful substances stored therein, and may control an rpm (output) of the hood fan motor in response to a result value thereof.

The technical objects of the present invention are not limited to the above-described objects, and other objects that are not described will be clearly understood by those skilled in the art from the following description.

### [Technical Solution]

To achieve the objects, an artificial intelligence range hood according to one example of the present invention has a technical feature of including: a hood body located above a heating device, and including a hood base plate having a plurality of cooking oil fume suction parts formed thereon and formed in a central portion thereof with a duct guidance hole, and an outer casing vertically installed on the hood base plate; a fixed intake and exhaust duct vertically and fixedly installed on an upper side of an inside of the outer casing to guide suction and discharge of cooking oil fumes and indoor polluted air generated during food cooking; a hood fan motor installed on an upper side of the fixed intake and exhaust duct to forcibly discharge the cooking oil fumes and indoor polluted air introduced into the fixed discharge intake and exhaust duct to an outside; a movable intake and exhaust duct movably installed under the fixed intake and exhaust duct such that the cooking oil fumes are sucked and discharged as the movable intake and exhaust duct moves up and down along the duct guidance hole; a height adjustment module for adjusting a height of the movable intake and exhaust duct; an indoor polluted air intake and exhaust duct connected to a middle portion of the fixed intake and exhaust duct to guide the suction and discharge of the indoor polluted air; and a discharge mode conversion unit configured to discharge the cooking oil fumes and the indoor polluted air by selectively opening or closing the movable intake and exhaust duct or the indoor polluted air intake and exhaust duct.

In addition, the movable intake and exhaust duct may include: a movable duct housing configured to guide the discharge of the cooking oil fumes; an oil filter replaceably installed on the movable duct housing and configured to filter oil (oil vapor) contained in the cooking oil fumes; and an oil drip tray detachably installed on a lower side of the movable duct housing and formed on an outer surface thereof with a plurality of cooking oil fume suction holes.

In addition, the height adjustment module may include: a winding motor configured to generate power; a winding roll installed on a rotation shaft of the winding motor; and a winding wire wound around the winding roll and having an end fixed to the movable intake and exhaust duct, in which the height adjustment module may adjust a vertical position (height) of the movable intake and exhaust duct by rotating the winding roll in a forward or reverse direction using the power of the winding motor to wind or unwind the winding wire.

In addition, the discharge mode conversion unit may include: a damper installed at the middle portion of the fixed intake and exhaust duct and rotatable about a hinge shaft in order to selectively open or close the indoor polluted air intake and exhaust duct or the movable intake and exhaust duct; a damper rotation motor configured to rotate the damper about the hinge shaft; and an arm bracket configured to connect the damper and the hinge shaft of the damper rotation motor.

In addition, the cooking oil fumes generated during food cooking and introduced into the cooking oil fume suction hole may be discharged to the outside (atmosphere) while passing through the duct housing and the fixed intake and exhaust duct after the oil (oil vapor) is filtered through the oil filter.

In addition, the cooking oil fumes moving upward during food cooking and not introduced into the cooking oil fume suction hole may be introduced into a filter net of the cooking oil fume suction part, and may be discharged to the outside (atmosphere) while passing through the movable duct housing and the fixed intake and exhaust duct after the oil is filtered through the oil filter.

In addition, an artificial intelligence range hood according to another example of the present invention may further include: a sensor module including a first sensor unit configured to detect the cooking oil fumes and a second sensor unit configured to detect the indoor polluted air; and a control unit configured to control an operation of the hood fan motor and the discharge mode conversion unit to selectively discharge the cooking oil fumes or the indoor polluted air by receiving signal values detected by the first sensor unit and the second sensor unit.

The control unit may control the operation of the discharge mode conversion unit based on artificial intelligence by using extracted data and calculated discharge efficiency as learning data.

In addition, the sensor module may further include a third sensor unit configured to detect a height of a food cooking vessel, and the control unit may receive the signal values detected by the third sensor unit and automatically adjust the duct housing of the movable intake and exhaust duct while moving the duct housing up and down, and drives the hood fan moor to allow the cooking oil fumes to be sucked or discharged.

In addition, the sensor module may further include a harmful substance detection sensor unit configured to detect concentrations of various harmful substances generated during cooking, and the control unit may be configured to compare the concentrations of various harmful substances detected by the harmful substance detection sensor unit with reference values for various harmful substances stored therein, and control an rpm of the hood fan motor in response to a result value thereof.

### [Advantageous Effects]

As described above, the present invention has the following effects.

First, it is possible to rapidly and easily discharge cooking oil fumes and indoor polluted air by selectively opening or closing a movable intake and exhaust duct or an indoor polluted air intake and exhaust duct, prevent industrial accidents in advance, such as lung cancer that may be caused by continuously sucking cooking oil fumes including various harmful substances by a reference amount or more, and automatically create a pleasant indoor air quality environment by significantly improving indoor air quality.

Second, it is possible to rapidly suck and discharge the cooking oil fumes by lowering the movable intake and exhaust duct to a portion where the cooking oil fumes are generated, and rapidly discharge the cooking oil fumes by allowing the cooking oil fumes to sequentially pass through the movable intake and exhaust duct and a fixed intake and exhaust duct after the cooking oil fumes are collected into a cooking oil fume suction hole in a 360° lateral direction of an oil drip tray, thereby protecting the health of a cook.

Third, the cooking oil fumes generated during food cooking and introduced into the cooking oil fume suction hole may be discharged to the outside while passing through the duct housing and the fixed intake and exhaust duct after the oil (oil vapor) is filtered through the oil filter, and the cooking oil fumes moving upward during food cooking and not introduced into the cooking oil fume suction holes may be introduced into a filter net of the cooking oil fume suction part, and may be discharged to the outside while passing through the movable duct housing and the fixed intake and exhaust duct after the oil is filtered through the oil filter, thereby rapidly discharging most of the cooking oil fumes to solve the social problem of lung cancer occurring due to breathing in the cooking oil fumes.

Fourth, the control unit may control the operation of the discharge mode conversion unit based on artificial intelligence by using the extracted data and the calculated discharge efficiency as learning data to automatically discharge the cooking oil fumes or the indoor polluted air.

Fifth, the control unit may automatically and rapidly discharge the cooking oil fumes by driving the hood fan motor after the position of the duct housing of the movable intake and exhaust duct is adjusted while automatically moving the duct housing up and down.

Sixth, the control unit may compare the concentrations of various harmful substances detected by the harmful substance detection sensor with the reference values for various harmful substances stored therein, and may control an rpm (output) of the hood fan motor in response to the result value thereof.

The effects of the present invention are not limited to the above-described effects, and other effects that are not described will be clearly understood by those skilled in the art from the description of the claims.

### [Description of Drawings]

FIG. 1 is a combined perspective view showing an artificial intelligence range hood according to one embodiment of the present invention.
FIG. 2 is a bottom perspective view of FIG. 1.
FIG. 3 is a side view of FIG. 1.
FIG. 4 is a plan view of FIG. 1.
FIG. 5 is an exploded perspective view showing the artificial intelligence range hood according to one embodiment of the present invention.
FIG. 6 is a main part extraction view of FIG. 5.
FIG. 7 is a perspective view showing a height adjustment module and a discharge module conversion unit in the artificial intelligence range hood according to one embodiment of the present invention.
FIG. 8 is an exploded perspective view showing the discharge mode conversion unit in the artificial intelligence range hood according to one embodiment of the present invention.
FIG. 9 is a view showing a state in which an oil drip tray of a movable intake and exhaust duct protrudes downward from a hood base plate, in an artificial intelligence range hood according to one embodiment of the present invention.
FIG. 10 is a view showing suction and discharge of cooking oil fumes while moving the movable intake and exhaust duct up and down, in an artificial intelligence range hood according to one embodiment of the present invention.
FIGS. 11 and 12 are views for explaining discharge of cooking oil fumes and indoor polluted air by selectively opening or closing the movable intake and exhaust duct or an indoor polluted air intake and exhaust duct by driving the discharge mode conversion unit, in the artificial intelligence range hood according to one embodiment of the present invention.
FIG. 13 is a view showing a state where the indoor polluted air intake and exhaust duct is opened by driving the discharge mode conversion unit.
FIGS. 14 and 15 are views showing a discharge path of the cooking oil fumes without lowering the movable intake and exhaust duct in a state where the movable intake and exhaust duct is opened.
FIG. 16 is a view showing a discharge path of the cooking oil fumes while lowering the movable intake and exhaust duct in a state where the movable intake and exhaust duct is opened.
FIG. 17 is a view for explaining introduction into a cooking oil fume suction hole in a 360° lateral direction of the oil drip tray.
FIG. 18 is a block diagram for explaining a function of detecting cooking oil fumes and indoor polluted air using a sensor module and automatically discharging the cooking oil fumes and the indoor polluted air in an artificial intelligence range hood according to another embodiment of the present invention.

### [Best Mode for Invention]

Hereinafter, an artificial intelligence range hood according to a preferred embodiment of the present invention will be described in detail with reference to the accompanying drawings.

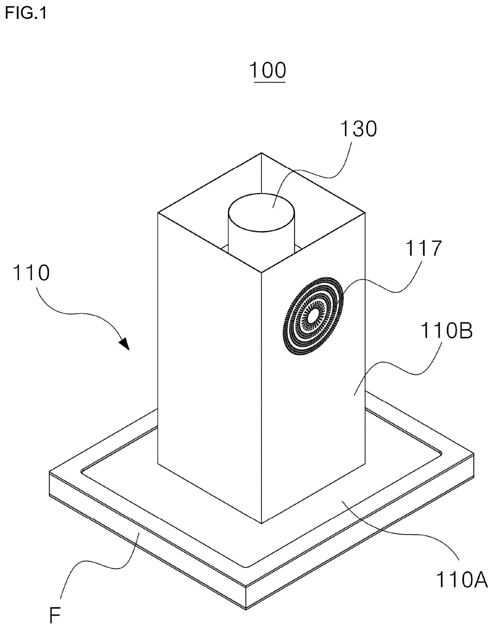

FIG. 1 is a combined perspective view showing an artificial intelligence range hood according to one embodiment of the present invention.

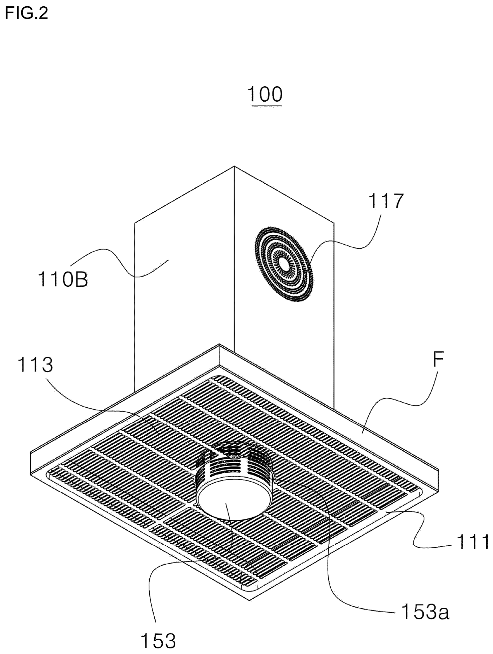

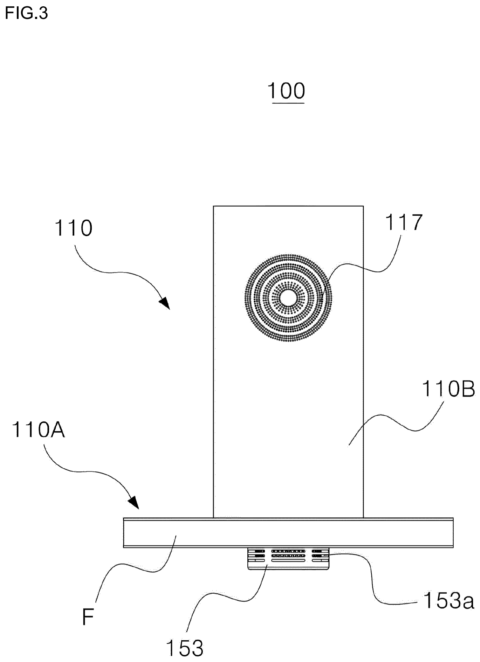

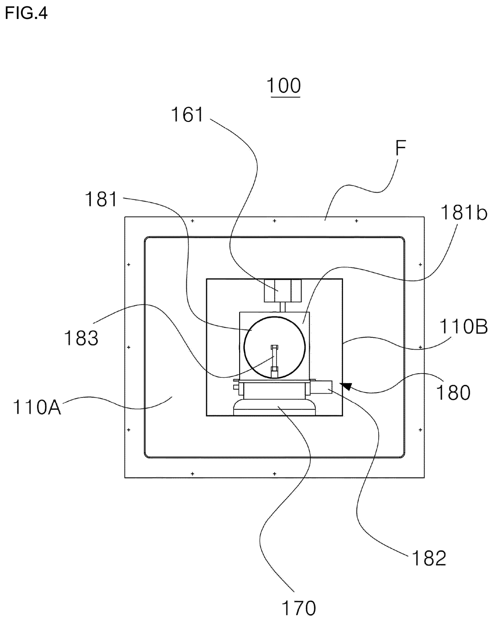

FIG. 2 is a bottom perspective view of FIG. 1, FIG. 3 is a side view of FIG. 1, and FIG. 4 is a plan view of FIG. 1.

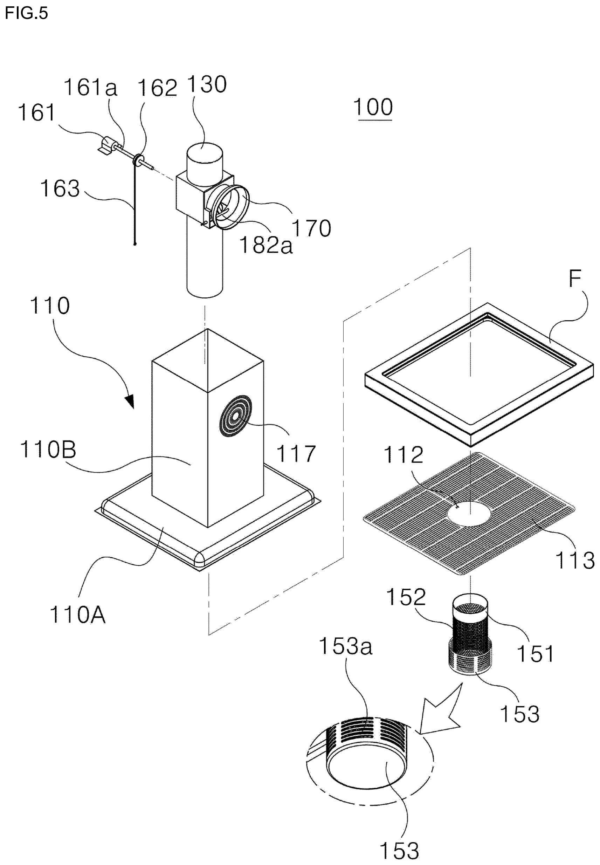

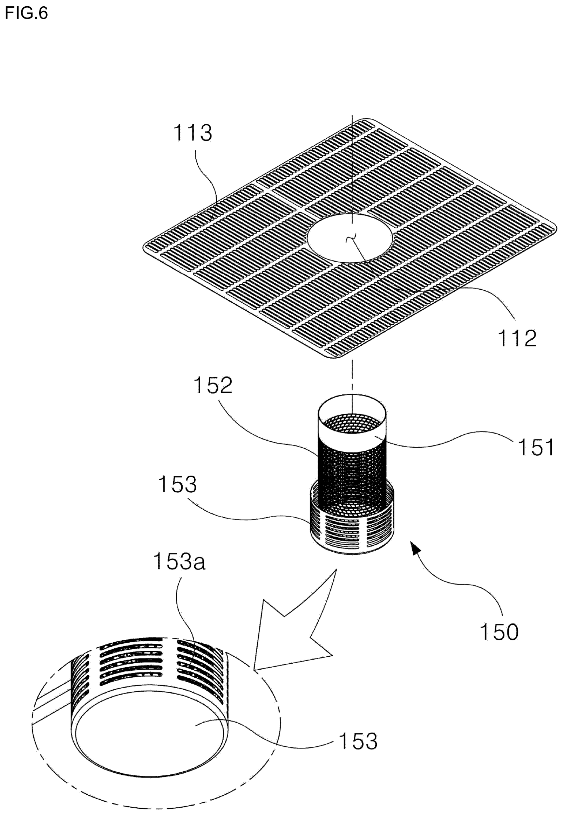

FIG. 5 is an exploded perspective view showing the artificial intelligence range hood according to one embodiment of the present invention, an FIG. 6 is a main part extraction view of FIG. 5.

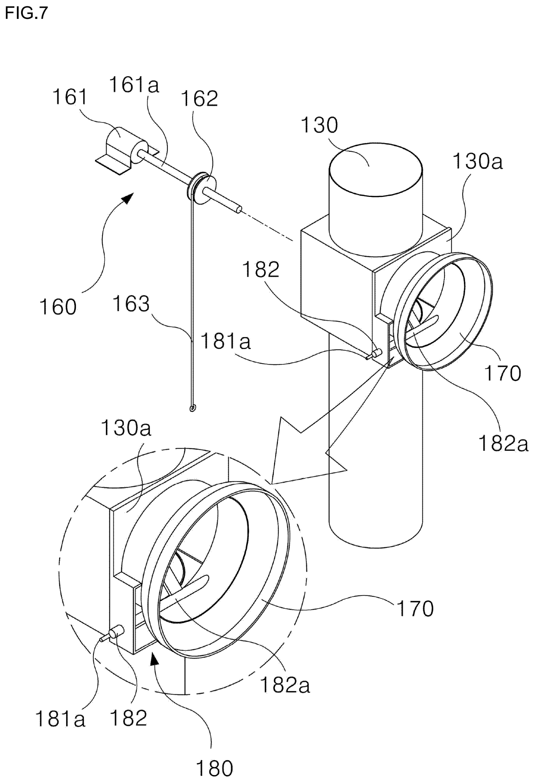

FIG. 7 is a perspective view showing a height adjustment module and a discharge module conversion unit in the artificial intelligence range hood according to one embodiment of the present invention.

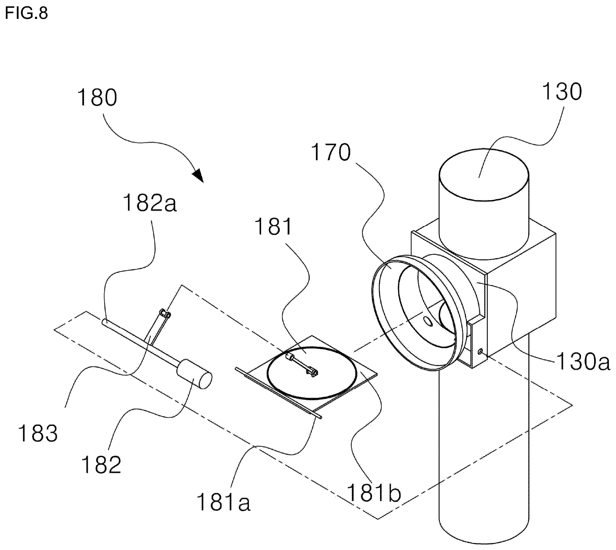

FIG. 8 is an exploded perspective view showing the discharge mode conversion unit in the artificial intelligence range hood according to one embodiment of the present invention.

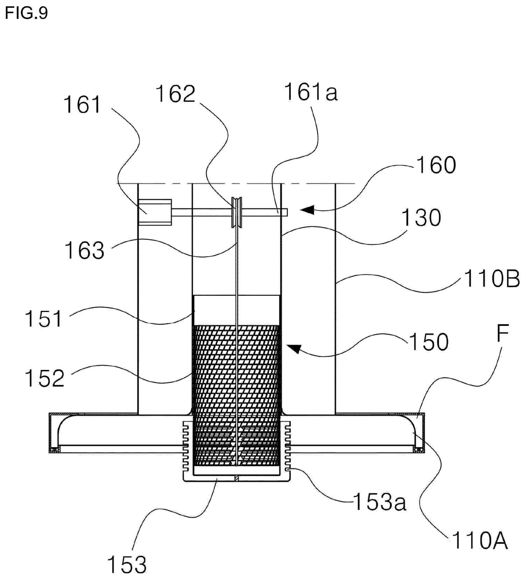

FIG. 9 is a view showing a state in which an oil drip tray of a movable intake and exhaust duct protrudes downward from a hood base plate, in an artificial intelligence range hood according to one embodiment of the present invention.

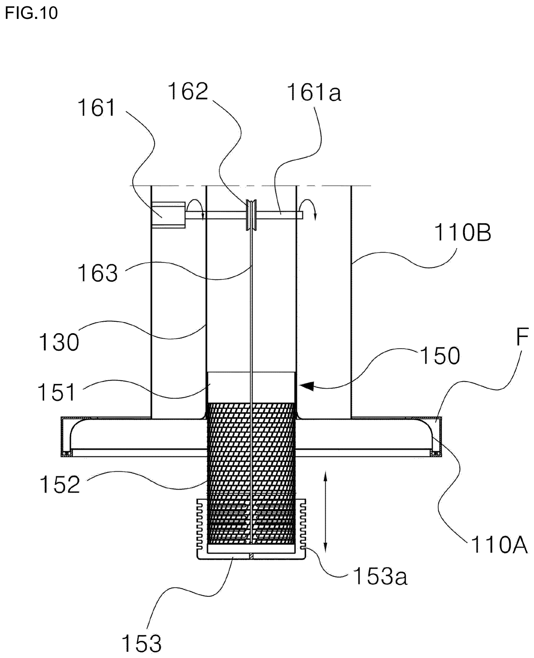

FIG. 10 is a view showing suction and discharge of cooking oil fumes while moving the movable intake and exhaust duct up and down, in an artificial intelligence range hood according to one embodiment of the present invention.

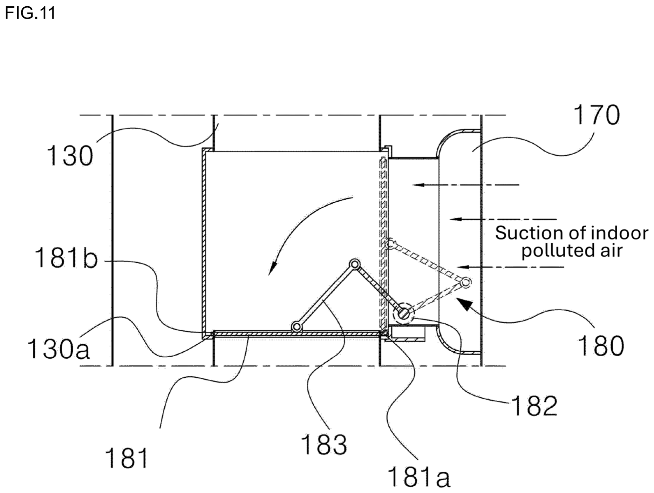

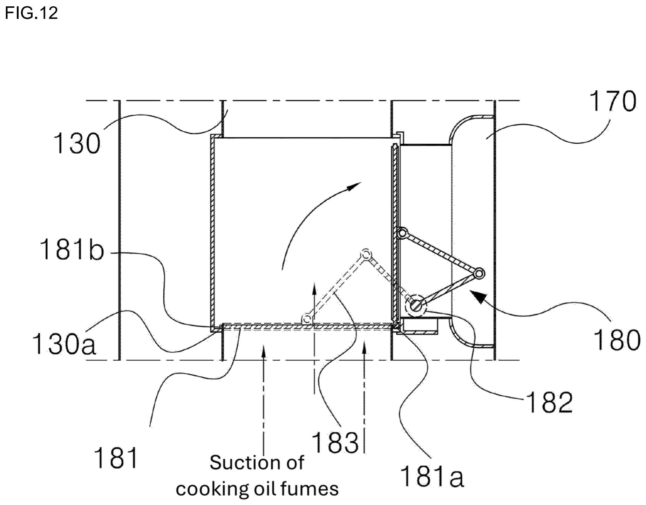

FIGS. 11 and 12 are views for explaining discharge of cooking oil fumes and indoor polluted air by selectively opening or closing the movable intake and exhaust duct or an indoor polluted air intake and exhaust duct by driving the discharge mode conversion unit, in the artificial intelligence range hood according to one embodiment of the present invention.

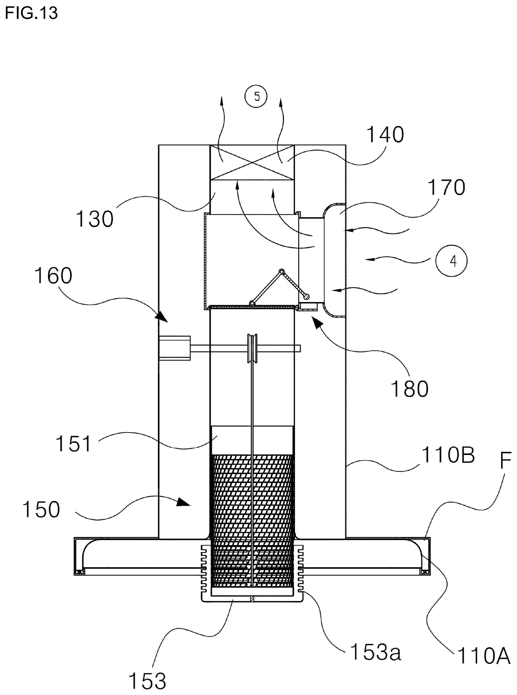

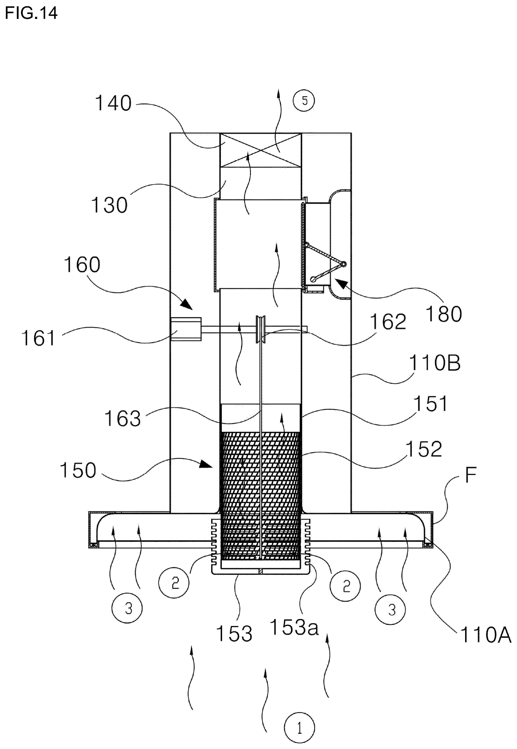

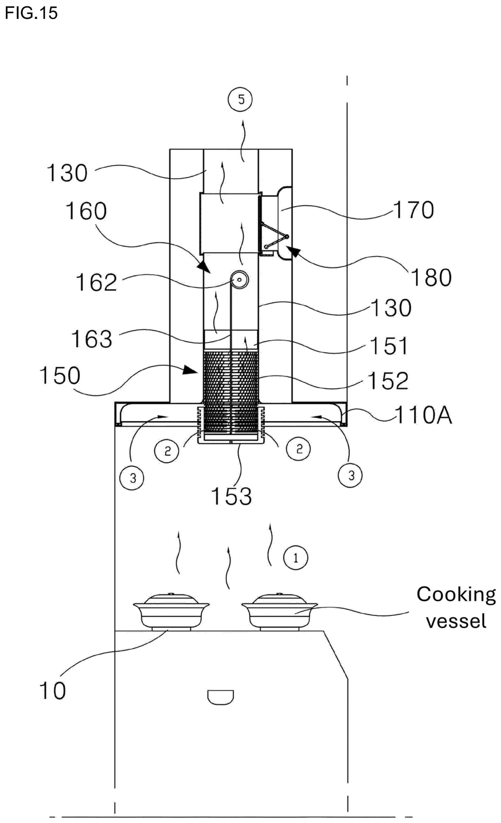

FIG. 13 is a view showing a state where the indoor polluted air intake and exhaust duct is opened by driving the discharge mode conversion unit, and FIGS. 14 and 15 are views showing a discharge path of the cooking oil fumes without lowering the movable intake and exhaust duct in a state where the movable intake and exhaust duct is opened.

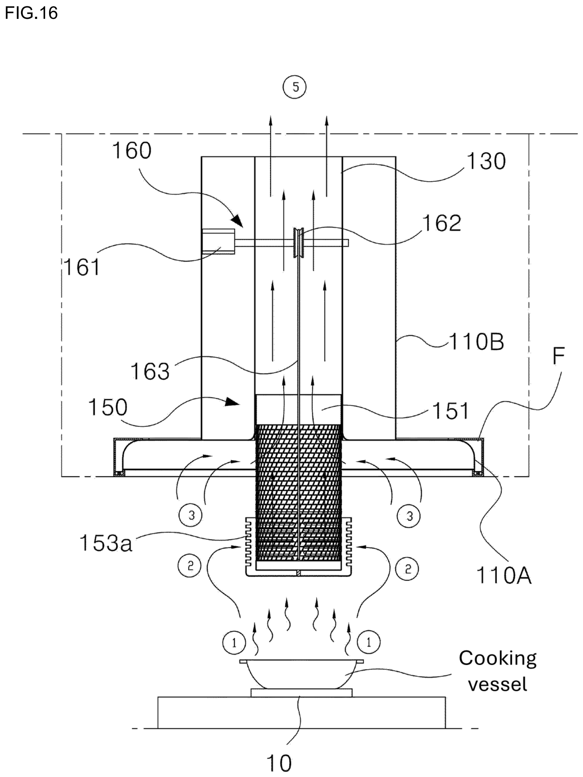

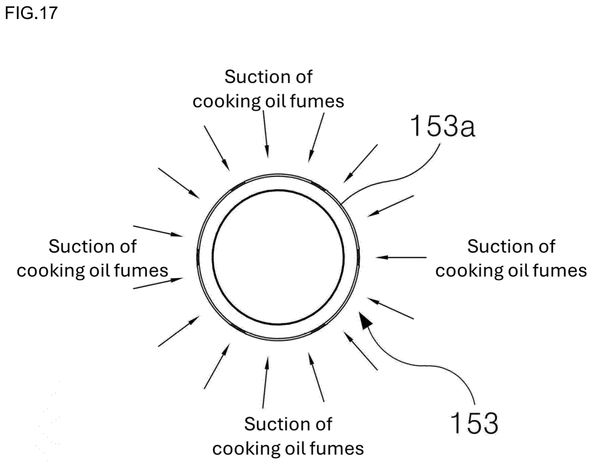

In addition, FIG. 16 is a view showing a discharge path of the cooking oil fumes while lowering the movable intake and exhaust duct in a state where the movable intake and exhaust duct is opened, and FIG. 17 is a view for explaining introduction into a cooking oil fume suction hole in a 360° lateral direction of the oil drip tray.

As shown in the above drawings, an artificial intelligence range hood 100 according to one embodiment of the present invention has a technical feature of including: a hood body 110 located above a range 10, which is a heating device; a fixed intake and exhaust duct 130 for guiding suction and discharge of cooking oil fumes and indoor polluted air; an hood fan motor 140 for forcibly discharging the cooking oil fumes and the indoor polluted air to an outside; a movable intake and exhaust duct 150 configured to suck and discharge the cooking oil fumes generated during food cooking in the range 10 while moving up and down; a height adjustment module 160 for adjusting a position of the movable intake and exhaust duct 150 up and down; an indoor polluted air intake and exhaust duct 170 configured to guide the suction and discharge of the indoor polluted air; and a discharge mode conversion unit 180 that may adjust a discharge mode by selectively opening or closing the fixed intake and exhaust duct 130 or the indoor polluted air intake and exhaust duct 170.

Components of the artificial intelligence range hood 100 according to one embodiment of the present invention will be described in detail as follows.

First, the hood body 110 is installed at a predetermined height above the range 10, which is a heating device (see FIGS. 15 and 16). In this case, the heating device includes both a gas range and an induction stove.

As shown in FIGS. 1 to 6, the hood body 110 may include a hood base plate 110A and an outer casing 110B.

A cooking oil fume suction part 111 (shown in FIG. 2) is formed under the hood base plate 110A. The cooking oil fume suction part 111 refers to an opening that may suck cooking oil fumes.

A frame part F is coupled to an outer periphery of the hood base plate 110A to protect an exterior, and a filter net 113 is detachably replaced in the frame part F.

A duct guidance hole 112 is formed in a central portion of the filter net 113. The movable intake and exhaust duct 150 is inserted into the duct guidance hole 112 and serves to guide a vertical movement of the movable intake and exhaust duct 150 when moving up and down.

The filter net 113 serves to filter oil contained in the cooking oil fumes generated during cooking.

The hood base plate 110A is not limited to a rectangular shape, and may be formed in various shapes according to design conditions.

The outer casing 110B is vertically installed on the hood base plate 110A. A suction port 117 for sucking indoor polluted air is formed on a side surface of the outer casing 110B.

In addition, the fixed intake and exhaust duct 130 is vertically fixed inside the outer casing 110B to guide the suction and discharge of polluted gas (for example, including cooking oil fumes and indoor polluted air).

The fixed intake and exhaust duct 130 is preferably composed of a smooth rigid PVC pipe, a soft PVC duct hose, and a stainless steel duct so that oil does not deposit on an inner surface thereof.

In addition, the hood fan motor 140 (shown in FIGS. 13 and 14) is installed at an upper side of the outer casing 110B to forcibly discharge the polluted gas guided by the fixed intake and exhaust duct 130 to the outside.

The hood fan motor 140 includes a fan or blower called an exhaust fan.

In addition, the movable intake and exhaust duct 150 is installed to be movable up and down under the fixed intake and exhaust duct 130 so as to suck and discharge the cooking oil fumes generated during food cooking in the range 10 while vertically moving along the guidance hole 112.

As shown in FIGS. 5 and 6, the movable intake and exhaust duct 150 may include: a movable duct housing 151 configured to guide the cooking oil fumes; an oil filter 152 replaceably installed on the movable duct housing 151 and configured to filter oil contained in the cooking oil fumes when the cooking oil fumes are sucked and discharged during food cooking in the range 10; and an oil drip tray 153 openably and closably installed on a lower side of the movable duct housing 151, formed in an outer circumferential surface thereof with a plurality of cooking oil fume suction holes 153a, and having a structure in which a lower end portion thereof is closed.

The entire movable intake and exhaust duct 150 may be replaceable and may be configured to replace only the oil filter 152.

The oil drip tray 153 may be configured to maintain a state of protruding downward from the hood base plate 110A, thereby sucking and discharging the cooking oil fumes at any time through the cooking oil fume suction holes 153a (see FIG. 9).

The oil drip tray 153 serves to temporarily collect oil when the oil filtered by the oil filter 152 falls downward, and prevents the filtered oil from falling upward from a food vessel.

The oil drip tray 153 may be formed in a cap shape in which a lower portion thereof is closed such that the dropped oil does not overflow, and further, the cooking oil fume suction holes 153a are radially formed along the outer circumferential surface of the oil drip tray 153 such that the cooking oil fumes may be sucked in a 360° direction (see FIGS. 16 and 17).

In addition, the oil drip tray 153 may be detachably installed on a lower portion of the duct housing 151.

The oil drip tray 153 may be separated from the lower portion of the duct housing 151 to remove oil collected in the oil drip tray 153, and the oil drip tray 153 may be mounted again on the lower portion of the duct housing 151.

Liquid oil filtered through the oil filter 152 is collected while flowing down to a bottom surface of an inner side of the oil drip tray 153, so that the oil is not exposed to the outside, thereby protecting an aesthetic appearance.

The detachable structure of the oil drip tray 153 is not limited to the present embodiment, and may be changed into various structures. For example, although not shown in the drawings, a coupling groove may be formed in a lower side of the duct housing 151, and a coupling protrusion may be formed on the oil drip tray 153, so that the coupling protrusion may be inserted into the coupling groove.

In addition, the height adjustment module 160 adjusts a height of the movable intake and exhaust duct 150 up and down.

As shown in FIGS. 7, 9, and 10, the height adjustment module 160 includes: a winding motor 161 configured to generate power; a winding roll 162 installed on a rotation shaft 161a of the winding motor 161; and a winding wire 163 having an end fixed to the movable intake and exhaust duct 150 and wound around the winding roll 162.

The height adjustment module 160 is configured to adjust a vertical position (height) of the movable intake and exhaust duct 150 by rotating the winding roll 162 in a forward or reverse direction using the power of the winding motor 161 to wind or unwind the winding wire 163.

In addition, the indoor polluted air intake and exhaust duct 170 may be connected to the middle portion of the fixed intake and exhaust duct 130 to guide the suction and discharge of the indoor polluted air, and may be fixedly installed in the outer casing 110B (see FIG. 13).

In addition, referring to FIGS. 8, 11, and 12, the discharge mode conversion unit 180 discharges the cooking oil fumes or indoor polluted air generated during food cooking in the range 10 by selectively opening or closing the movable intake and exhaust duct 150 or the indoor polluted air intake and exhaust duct 170.

The discharge mode conversion unit 180 includes: a damper 181 installed at the middle portion of the fixed intake and exhaust duct 130 and rotatable about a hinge shaft 181a in order to selectively open or close the indoor polluted air intake and exhaust duct 170 or the movable intake and exhaust duct 150; a damper rotation motor 182 configured to rotate the damper 181 about the hinge shaft 181a; and an arm bracket 183 configured to connect the damper 181 and the hinge shaft 181a of the damper rotation motor 182.

The discharge mode conversion unit 180 is configured such that the damper rotation motor 182 is driven to rotate the damper 181 about a motor hinge shaft 182a, thereby selectively opening and closing the indoor polluted air intake and exhaust duct 170 or the movable intake and exhaust duct 150.

The hinge shaft 181a further extends from an outer circumference of the damper 180 while forming a step, in which the hinge shaft 181a is closely supported by a step 130a formed on an inner side of the fixed intake and exhaust duct 130, so that the damper 181 may stably and selectively open and close the indoor polluted air intake and exhaust duct 170 or the movable intake and exhaust duct 150, thereby rapidly discharging the cooking oil fumes or indoor polluted air generated during food cooking in the range 10, whereby allowing the hood fan motor 140 to have maximized discharge efficiency when the cooking oil fumes or the indoor polluted air are discharged to the outside (see FIGS. 11 and 12).

The step 130a refers to a portion formed at an inlet side of the indoor polluted air intake and exhaust duct 170 or the movable intake and exhaust duct 150 to support the hinge shaft 181a.

The operation and effect of the artificial intelligence range hood 100 according to one embodiment of the present invention configured as described above are as follows.

In the artificial intelligence range hood 100 according to one embodiment of the present invention, a user may alternately open or close the movable intake and exhaust duct 150 or the indoor polluted air intake and exhaust duct 170 using the discharge mode conversion unit 180, thereby rapidly and effectively discharging the cooking oil fumes or indoor polluted air generated during food cooking in the range 10.

Although not shown in the drawings, a plurality of operation buttons may be provided on a front surface of the hood base plate 110A or a separate operation panel such that the user may manually or automatically operate the operation of the present invention.

In the description of the present invention, in order to help understanding the discharge of the cooking oil fumes and indoor polluted air, the cooking oil fumes generated during food cooking in the range 10 are indicated by an arrow ①, the cooking oil fumes introduced through the cooking oil fume suction holes 153a are indicated by an arrow ②, the cooking oil fumes introduced through the filter net 113 are indicated by an arrow ③, the indoor polluted air introduced into the indoor polluted air intake and exhaust duct 170 is indicated by an arrow ④, and the polluted gas discharged to the outside is indicated by an arrow ⑤.

Hereinafter, a process of sucking and discharging the cooking oil fumes will be described as follows.

When the cooking oil fumes are generated during food cooking in the range 10, as shown in FIGS. 14 and 15, the indoor polluted air intake and exhaust duct 170 is closed by the discharge mode conversion unit 180, whereas the movable intake and exhaust duct 150 is opened.

Describing the operation of the discharge mode conversion unit 180 (see FIGS. 11 and 12), the damper rotation motor 182 is driven to rotate the damper 181 about the hinge shaft 181a, thereby closing the indoor polluted air intake and exhaust duct 170 and opening the movable intake and exhaust duct 150.

Next, as shown in FIG. 16, the height of the movable intake and exhaust duct 150 is adjusted by the height adjustment module 160. That is, the movable intake and exhaust duct 150 is lowered.

Describing the operation of the height adjustment module 160, as the winding motor 161 is driven to unwind and lower the winding wire 163, the movable duct housing 151 and the oil drip tray 153 are also lowered. In this case, the lowering positions of the movable duct housing 151 and the oil drip tray 153 are appropriately adjusted according to the amount of cooking oil fumes (see FIGS. 10 and 16).

As a suction force is generated by the operation of the hood fan motor 140, the cooking oil fumes are sucked in the 360° direction through the cooking oil fume suction holes 153a (see FIG. 17). Thereafter, the cooking oil fumes pass through the oil filter 152 to filter oil (oil vapor) contained in the cooking oil fumes, and are discharged to the outside (atmosphere) through the movable duct housing 151 and the fixed intake and exhaust duct 130.

As shown in FIGS. 16 and 17, since the cooking oil fumes (arrow ①) are rapidly sucked in the 360° direction through the cooking oil fume suction holes 153a (arrow ②), suction and discharge efficiency may be increased even in a narrow place as well as a wide place, and the occurrence of lung cancer due to breathing in the cooking oil fume may be prevented.

In addition, the cooking oil fumes (arrow ③) not introduced into the cooking oil fume suction holes 153a are introduced into the cooking oil fume suction part 111, and are discharged to the outside (atmosphere) while passing through the movable duct housing 151 and the fixed intake and exhaust duct 130 after the oil is filtered through the oil filter 152 (arrow ⑤).

Hereinafter, a process of discharging the indoor polluted air will be described as follows.

When there is a need to discharge the cooking oil fumes or indoor polluted air (arrow ④) remaining indoors without being sucked and discharged through the movable intake and exhaust duct 150, the movable intake and exhaust duct 150 is closed by the discharge mode conversion unit 180, whereas the indoor polluted air intake and exhaust duct 170 is opened.

Referring to FIGS. 11 to 13, describing the operation of the discharge mode conversion unit 180, the damper rotation motor 182 is driven to rotate the damper 181 about the hinge shaft 181a, thereby closing the movable intake and exhaust duct 150, whereas the indoor polluted air intake and exhaust duct 170 is opened.

As the suction force is generated by the operation of the hood fan motor 140, the indoor polluted air is discharged to the outside (atmosphere) through the indoor polluted air intake and exhaust duct 170 and the fixed intake and exhaust duct 130 (arrow ⑤).

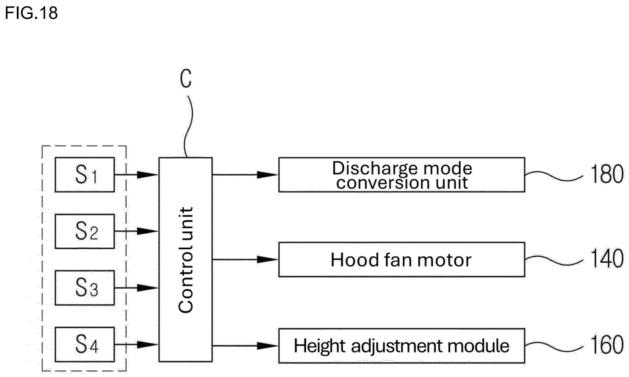

Meanwhile, FIG. 18 is a block diagram for explaining a function of detecting cooking oil fumes and indoor polluted air using a sensor module and automatically discharging the cooking oil fumes and the indoor polluted air in an artificial intelligence range hood according to another embodiment of the present invention.

In the same drawing, the same reference numerals are assigned to the same components as those of the artificial intelligence range hood 100 according to one embodiment of the present invention, and descriptions thereof will be omitted.

Further referring to FIG. 18, the artificial intelligence range hood according to another embodiment of the present invention has a function of detecting the cooking oil fumes and the indoor polluted air using a sensor module and automatically discharging the cooking oil fumes and the indoor polluted air.

The artificial intelligence range hood according to another embodiment of the present invention may further include: a sensor module S including a first sensor unit S1 configured to detect the cooking oil fumes and a second sensor unit S2 configured to detect the indoor polluted air; and a control unit C configured to control an operation of the hood fan motor 140 and the discharge mode conversion unit 180 to selectively discharge the cooking oil fumes or the indoor polluted air by receiving signal values detected by the first sensor unit S1 and the second sensor unit S2.

The first sensor unit S1 may be installed on the hood base plate 110A to detect cooking oil fumes generated during food cooking, and transmit a detection value thereof to the control unit C.

The control unit C adjusts the discharge mode conversion unit 180 based on artificial intelligence by using extracted data and calculated cooking oil fume discharge efficiency as learning data based on the detection value, thereby allowing the cooking oil fumes to be rapidly sucked and discharged.

In addition, the sensor module S further includes a third sensor unit S3 configured to detect a height of a food cooking vessel.

The control unit C receives the signal values detected by the third sensor unit S3, automatically adjusts the duct housing 151 of the movable intake and exhaust duct 150, and drives the hood fan motor 140 to allow a large amount of cooking oil fumes to be rapidly sucked or discharged.

In addition, the sensor module S further includes a harmful substance detection sensor unit S4 configured to detect concentrations of various harmful substances generated during cooking.

The control unit C is configured to compare the concentrations of various harmful substances detected by the harmful substance detection sensor unit S4 with reference values for various harmful substances stored therein, and control an rpm of the hood fan motor (140) in response to a result value thereof, thereby allowing various harmful substances to be rapidly discharged.

As described above, the present invention has the following effects.

First, it is possible to rapidly and easily discharge cooking oil fumes and indoor polluted air by selectively opening or closing a movable intake and exhaust duct or an indoor polluted air intake and exhaust duct, prevent industrial accidents in advance, such as lung cancer that may be caused by continuously sucking cooking oil fumes including various harmful substances by a reference amount or more, and automatically create a pleasant indoor air quality environment by significantly improving indoor air quality.

Second, it is possible to rapidly suck and discharge the cooking oil fumes by lowering the movable intake and exhaust duct to a portion where the cooking oil fumes are generated, and rapidly discharge the cooking oil fumes by allowing the cooking oil fumes to sequentially pass through the movable intake and exhaust duct and a fixed intake and exhaust duct after the cooking oil fumes are collected into cooking oil fume suction holes in a 360° lateral direction an oil drip tray, thereby protecting the health of a cook.

Third, the cooking oil fumes generated during food cooking and introduced into the cooking oil fume suction hole may be discharged to the outside while passing through the duct housing and the fixed intake and exhaust duct after the oil (oil vapor) is filtered through the oil filter, and the cooking oil fumes moving upward during food cooking and not introduced into the cooking oil fume suction hole may be introduced into a filter net of the cooking oil fume suction part, and may be discharged to the outside while passing through the movable duct housing and the fixed intake and exhaust duct after the oil is filtered through the oil filter, thereby rapidly discharging most of the cooking oil fumes to solve the social problem of lung cancer occurring due to breathing in the cooking oil fumes.

Fourth, the control unit may control the operation of the discharge mode conversion unit based on artificial intelligence by using the extracted data and the calculated discharge efficiency as learning data to automatically discharge the cooking oil fumes or the indoor polluted air.

Fifth, the control unit may automatically and rapidly discharge the cooking oil fumes by driving the hood fan motor after the position of the duct housing of the movable intake and exhaust duct is adjusted while automatically moving the duct housing up and down.

Sixth, the control unit may compare the concentrations of various harmful substances detected by the harmful substance detection sensor with the reference values for various harmful substances stored therein, and may control an rpm (output) of the hood fan motor in response to the result value thereof.

Meanwhile, preferred embodiments of the present invention have been disclosed in the present specification and drawings, and although specific terms are used, these are merely used in a general sense to easily describe the technical contents of the present invention and help understanding of the present invention, and are not intended to limit the scope of the present invention.

It will be apparent to those skilled in the art to which the present invention pertains that other modifications based on the technical spirit of the present invention may be implemented in addition to the embodiments disclosed herein.

### [Industrial Availability]

As described above, the present invention has the following effects.

First, it is possible to rapidly and easily discharge cooking oil fumes and indoor polluted air by selectively opening or closing a movable intake and exhaust duct or an indoor polluted air intake and exhaust duct, prevent industrial accidents in advance, such as lung cancer that may be caused by continuously sucking cooking oil fumes including various harmful substances by a reference amount or more, and automatically create a pleasant indoor air quality environment by significantly improving indoor air quality.

Second, it is possible to rapidly suck and discharge the cooking oil fumes by lowering the movable intake and exhaust duct to a portion where the cooking oil fumes are generated, and rapidly discharge the cooking oil fumes by allowing the cooking oil fumes to sequentially pass through the movable intake and exhaust duct and a fixed intake and exhaust duct after the cooking oil fumes are collected into a cooking oil fume suction hole in a 360° lateral direction of an oil drip tray, thereby protecting the health of a cook.

Third, the cooking oil fumes generated during food cooking and introduced into the cooking oil fume suction hole may be discharged to the outside while passing through the duct housing and the fixed intake and exhaust duct after the oil (oil vapor) is filtered through the oil filter, and the cooking oil fumes moving upward during food cooking and not introduced into the cooking oil fume suction hole may be introduced into a filter net of the cooking oil fume suction part, and may be discharged to the outside while passing through the movable duct housing and the fixed intake and exhaust duct after the oil is filtered through the oil filter, thereby rapidly discharging most of the cooking oil fumes to solve the social problem of lung cancer occurring due to breathing in the cooking oil fumes.

Fourth, the control unit may control the operation of the discharge mode conversion unit based on artificial intelligence by using the extracted data and the calculated discharge efficiency as learning data to automatically discharge the cooking oil fumes or the indoor polluted air.

Fifth, the control unit may automatically and rapidly discharge the cooking oil fumes by driving the hood fan motor after the position of the duct housing of the movable intake and exhaust duct is adjusted while automatically moving the duct housing up and down.

Sixth, the control unit may compare the concentrations of various harmful substances detected by the harmful substance detection sensor with the reference values for various harmful substances stored therein, and may control an rpm (output) of the hood fan motor in response to the result value thereof.

## Claims

1. An artificial intelligence range hood comprising: a hood body (110) located above a heating device (10), and including a hood base plate (110A) having a plurality of cooking oil fume suction parts (111) formed thereon and formed in a central portion thereof with a duct guidance hole (112), and an outer casing (110B) vertically installed on the hood base plate (110A); a fixed intake and exhaust duct (130) vertically and fixedly installed on an upper side of an inside of the outer casing (110B) to guide suction and discharge of cooking oil fumes and indoor polluted air generated during food cooking; a hood fan motor (140) installed on an upper side of the fixed intake and exhaust duct (130) to forcibly discharge the cooking oil fumes and indoor polluted air introduced into the fixed discharge intake and exhaust duct (130) to an outside; a movable intake and exhaust duct (150) movably installed on a lower portion of the fixed intake and exhaust duct (130) such that the cooking oil fumes are sucked and discharged as the movable intake and exhaust duct (150) moves up and down along the duct guidance hole (112); a height adjustment module (160) for adjusting a height of the movable intake and exhaust duct (150); an indoor polluted air intake and exhaust duct (170) connected to a middle portion of the fixed intake and exhaust duct (130) to guide the suction and discharge of the indoor polluted air; and a discharge mode conversion unit (180) configured to discharge the cooking oil fumes and the indoor polluted air by selectively opening or closing the movable intake and exhaust duct (150) or the indoor polluted air intake and exhaust duct (170),
wherein the discharge mode conversion unit (180) includes: a damper (181) installed at the middle portion of the fixed intake and exhaust duct (130) and rotatable about a hinge shaft (181a) in order to selectively open or close the indoor polluted air intake and exhaust duct (170) or the movable intake and exhaust duct (150); a damper rotation motor (182) configured to rotate the damper (181) about the hinge shaft (181a); and an arm bracket (183) configured to connect the damper (181) and the hinge shaft (181a) of the damper rotation motor (182), and
wherein a step (130a) is formed on an inner side of an inlet of the indoor polluted air intake and exhaust duct (170) or the movable intake and exhaust duct (150), and a stopper (181b) further extends from an outer circumference of the damper (181) while forming a step,
so that, in a process of selectively opening and closing the indoor polluted air intake and exhaust duct (170) or the movable intake and exhaust duct (150) by rotating the damper (181) about the hinge shaft (181a), the stopper (181b) is closely supported by the step (130a), and thus the damper (181) alternately opens or closes the indoor polluted air intake and exhaust duct (170) or the movable intake and exhaust duct (150), thereby rapidly discharging the cooking oil fumes or indoor polluted air generated during food cooking in a range (10),
whereby allowing the hood fan motor (140) to have maximized discharge efficiency when the cooking oil fumes or the indoor polluted air are forcibly discharged to the outside.

2. The artificial intelligence range hood of claim 1, wherein the movable intake and exhaust duct (150) includes:
a movable duct housing (151) configured to guide the discharge of the cooking oil fumes;
an oil filter (152) replaceably installed on the movable duct housing (151) and configured to filter oil (oil vapor) contained in the cooking oil fumes; and
an oil drip tray (153) detachably installed on a lower side of the movable duct housing (151) and formed on an outer surface thereof with a plurality of cooking oil fume suction holes (153a).

3. The artificial intelligence range hood of claim 2, wherein the cooking oil fumes generated during food cooking and introduced into the cooking oil fume suction holes (153a) are discharged to the outside while passing through the duct housing (151) and the fixed intake and exhaust duct (130) after the oil (oil vapor) is filtered through the oil filter (152).

4. The artificial intelligence range hood of claim 2, wherein the cooking oil fumes moving upward during food cooking and not introduced into the cooking oil fume suction hole (153a) are introduced into a filter net (113) of the cooking oil fume suction part (111), and is discharged to the outside while passing through the movable duct housing (151) and the fixed intake and exhaust duct (130) after the oil is filtered through the oil filter (113).

5. The artificial intelligence range hood of claim 1, wherein the height adjustment module (160) includes:
a winding motor (161) configured to generate power;
a winding roll (162) installed on a rotation shaft (161a) of the winding motor (161); and
a winding wire (163) wound around the winding roll (162) and having an end fixed to the movable intake and exhaust duct (150),
wherein the height adjustment module (160) adjusts the height of the movable intake and exhaust duct (150) by rotating the winding roll (162) in a forward or reverse direction using the power of the winding motor (161) to wind or unwind the winding wire (163) around or from an outer circumference of the winding roll (162).

6. The artificial intelligence range hood of claim 2, wherein the oil drip tray (153) is configured to maintain a state of protruding downward from the hood base plate (110A).

7. The artificial intelligence range hood of claim 1, wherein the cooking oil fumes generated during food cooking are sucked or discharged by adjusting the height adjustment module (160) to adjust a vertical position of the movable intake and exhaust duct (150).

8. The artificial intelligence range hood of claim 1, further comprising:
a sensor module (S) including a first sensor unit (S1) configured to detect the cooking oil fumes and a second sensor unit (S2) configured to detect the indoor polluted air; and
a control unit (C) configured to control an operation of the hood fan motor (140) and the discharge mode conversion unit (180) to selectively discharge the cooking oil fumes or the indoor polluted air by receiving signal values detected by the first sensor unit (S1) and the second sensor unit (S2).

9. The artificial intelligence range hood of claim 8, wherein the control unit (C) controls the operation of the discharge mode conversion unit (180) based on artificial intelligence by using extracted data and calculated discharge efficiency as learning data.

10. The artificial intelligence range hood of claim 8, wherein the sensor module (S) further includes a third sensor unit (S3) configured to detect a height of a food cooking vessel, and
wherein the control unit (C) receives the signal values detected by the third sensor unit (S3) and adjusts the height adjustment module (160) so that a position of the duct housing (151) of the movable intake and exhaust duct (150) is automatically adjusted while moving the duct housing (151) up and down, and drives the hood fan moor (140) to allow the cooking oil fumes to be sucked or discharged.

11. The artificial intelligence range hood of claim 8, wherein the sensor module (S) further includes a harmful substance detection sensor unit (S4) configured to detect concentrations of various harmful substances generated during cooking, and
wherein the control unit (C) is configured to compare the concentrations of various harmful substances detected by the harmful substance detection sensor unit (S4) with reference values for various harmful substances stored therein, and control an rpm of the hood fan motor (140) in response to a result value thereof.

12. An artificial intelligence range hood comprising:
a hood body (110) located above a heating device (10);
a fixed intake and exhaust duct (130) configured to guide suction and discharge of cooking oil fumes and indoor polluted air generated during food cooking;
a hood fan motor (140) installed on an upper side of the fixed intake and exhaust duct (130) to forcibly discharge the cooking oil fumes and indoor polluted air introduced into the fixed discharge intake and exhaust duct (130) to an outside;
a movable intake and exhaust duct (150) movably installed under the fixed intake and exhaust duct (130) such that the cooking oil fumes are sucked and discharged;
a height adjustment module (160) for adjusting a height of the movable intake and exhaust duct (150);
an indoor polluted air intake and exhaust duct (170) connected to a middle portion of the fixed intake and exhaust duct (130) to guide the suction and discharge of the indoor polluted air; and
a discharge mode conversion unit (180) configured to discharge the cooking oil fumes and the indoor polluted air by selectively opening or closing the movable intake and exhaust duct (150) or the indoor polluted air intake and exhaust duct (170),
wherein the movable intake and exhaust duct (150) includes: a movable duct housing (151) configured to guide the discharge of the cooking oil fumes; an oil filter (152) replaceably installed on the movable duct housing (151) and configured to filter oil (oil vapor) contained in the cooking oil fumes; and an oil drip tray (153) detachably installed on a lower side of the movable duct housing (151), radially formed in an outer circumferential surface thereof with a plurality of cooking oil fume suction holes (153a), and having a structure in which a lower end portion thereof is closed,
wherein the cooking oil fumes generated during food cooking is collected into the cooking oil fume suction hole (153a) in a 360° lateral direction of the oil drip tray (153), and is sequentially discharged through the movable intake and exhaust duct (150) and the fixed intake and exhaust duct (130), thereby protecting health of a cook, and
wherein liquid oil filtered through the oil filter (152) is collected while flowing down to a bottom surface of an inner side of the oil drip tray (153), so that the oil is not exposed to the outside, thereby protecting an aesthetic appearance.

13. An artificial intelligence range hood comprising: a hood body (110) located above a heating device (10), and including a hood base plate (110A) having a plurality of cooking oil fume suction parts (111) formed thereon and formed in a central portion thereof with a duct guidance hole (112), and an outer casing (110B) vertically installed on the hood base plate (110A);
a fixed intake and exhaust duct (130) vertically and fixedly installed on an upper side of an inside of the outer casing (110B) to guide suction and discharge of cooking oil fumes and indoor polluted air generated during food cooking;
a hood fan motor (140) installed on an upper side of the fixed intake and exhaust duct (130) to forcibly discharge the cooking oil fumes and indoor polluted air introduced into the fixed discharge intake and exhaust duct (130) to an outside;
a movable intake and exhaust duct (150) movably installed under the fixed intake and exhaust duct (130) such that the cooking oil fumes are sucked and discharged as the movable intake and exhaust duct (150) moves up and down along the duct guidance hole (112);
a height adjustment module (160) for adjusting a height of the movable intake and exhaust duct (150);
an indoor polluted air intake and exhaust duct (170) connected to a middle portion of the fixed intake and exhaust duct (130) to guide the suction and discharge of the indoor polluted air; and
a discharge mode conversion unit (180) configured to discharge the cooking oil fumes and the indoor polluted air by selectively opening or closing the movable intake and exhaust duct (150) or the indoor polluted air intake and exhaust duct (170).
